# EUROPÄISCHE PATENTSCHRIFT

(11) **EP 3 329 332 B1**
(45) Veröffentlichungstag und Bekanntmachung des Hinweises auf die Patenterteilung: **15.05.2019**
(21) Anmeldenummer: 17794681.1
(22) Anmeldetag: 18.10.2017
(51) Int. Cl.: G05B 15/02

(54) **VERFAHREN ZUR ERMITTLUNG VON STÜTZPUNKTEN EINES VERSUCHSPLANS**
METHOD FOR DETERMINING SUPPORTING POINTS OF A TEST PLAN
PROCÉDÉ DE DÉTERMINATION DE POINTS DE SOUTIEN D'UN PLAN D'ESSAI

(30) Priorität: 20.10.2016 DE 102016120052
(43) Veröffentlichungstag der Anmeldung: 06.06.2018
(73) Patentinhaber: Technische Universität Darmstadt, 64289 Darmstadt (DE)
(72) Erfinder: RINDERKNECHT, Stephan, 72810 Gomaringen (DE); FOULARD, Stéphane, 63110 Rodgau (DE); FIETZEK, Rafael, 64293 Darmstadt (DE); ESSER, Arved, 64297 Darmstadt (DE)
(74) Vertreter: Habermann Intellectual Property Partnerschaft von Patentanwälten mbB
(86) Internationale Anmeldenummer: PCT/EP2017/076562
(87) Internationale Veröffentlichungsnummer: WO 2018/073286

(56) Entgegenhaltungen:
- DE-A1- 10 340 363
- DE-A1-102004 010 808

## Beschreibung

Die Erfindung betrifft ein Verfahren zur Ermittlung von Stützpunkten eines Versuchsplans zur Vermessung oder Simulation vorgegebener Versuchsgrößen einer Versuchsmaschine.

Bei der Vermessung bestimmter Eigenschaften von Versuchsmaschinen wie beispielsweise Verbrennungsmotoren, Getrieben oder gesamten Fahrzeugen, aber auch bei der Vermessung bestimmter Eigenschaften von Elektromotoren, Generatoren und vergleichbarer Maschinen werden Versuchspläne verwendet. Mit Hilfe der Versuchspläne sollen in möglichst kurzer Zeit Versuchswerte der vorgegebenen Versuchsgrößen in einem großen Variationsbereich von Maschinenparametern vermessen und erfasst werden, die die Versuchsgrößen beeinflussen. Zudem erlauben Versuchspläne die Wiederholung eines Versuchs, um die bereits ermittelten Versuchsergebnisse beispielsweise zu überprüfen und zu validieren. Versuchspläne können auch dazu verwendet werden, Eigenschaften der Versuchsmaschinen auf Grundlage eines mathematischen Modells der Versuchsmaschine durch eine Simulation zu bestimmen.

Als Versuchsgrößen kommen beliebige Parameter der Versuchsmaschine in Betracht. Diese Parameter können entweder unmittelbar messtechnisch erfasst oder auf Grundlage messtechnisch erfasster Größen über mathematische Modelle bestimmt werden. Wenn beispielsweise ein Kraftfahrzeug vermessen werden soll, kann es sich bei der Versuchsgröße um den Kraftstoffverbrauch des Kraftfahrzeugs oder beispielsweise auch um das Schädigungsniveau verschiedener Komponenten des Kraftfahrzeugs handeln.

Die zur Vermessung verwendeten Versuchspläne weisen für jeden bei dem Versuch zu variierenden Maschinenparameter der Versuchsmaschine eine Abfolge von Stützpunkten auf. Die Versuchsmaschine wird mit Hilfe dieser Stützpunkte so gesteuert oder geregelt, dass die verschiedenen Betriebsparameter zu mit den Stützpunkten verknüpften Zeitpunkten mit den Stützpunkten ebenfalls verknüpften Maschinenparameterwerte einnehmen. Jeder Stützpunkt beinhaltet also eine Zeitpunktinformation sowie einen Maschinenparameterwert. Bei den Stützpunkten kann es sich beispielsweise um Geschwindigkeiten eines Kraftfahrzeugs handeln, die dieses zu bestimmten Zeitpunkten erreichen soll. Die Abfolge der Stützpunkte bildet dabei ein von dem Kraftfahrzeug abzufahrendes Geschwindigkeitsprofil oder eine Strecke, sofern die Querdynamik des Fahrzeugs berücksichtigt wird.

Insbesondere zur Ermittlung des Kraftstoffverbrauchs von Kraftfahrzeugen sind verschiedene standardisierte Versuchspläne bekannt. Ein häufig verwendeter Versuchsplan ist der sogenannte NEFZ-Zyklus.

Aus dem Stand der Technik sind zahlreiche Verfahren bekannt, um Versuchspläne zu bestimmen. Hierbei werden die verwendeten Methoden üblicherweise nach dem mit der Vermessung beabsichtigten Zweck ausgewählt. Beispielsweise werden bei der Vermessung dynamischer Eigenschaften der Versuchsmaschine üblicherweise Versuchspläne verwendet, die sich grundlegend von solchen Versuchsplänen unterscheiden, mit denen die Versuchsgrößen unter stationären Betriebsbedingungen vermessen werden sollen. Bekannte Verfahren zur Erstellung von Versuchsplänen werden beispielsweise unter den Schlagworten "Design of Experiments" und "statistische Versuchsplanung" zusammengefasst.

Darüber hinaus ist es in einigen Bereichen wünschenswert, Versuchspläne so zu gestalten, dass durch die Versuchspläne ein reales Nutzungsprofil einer Feldmaschine abgebildet wird. Dies ist beispielsweise bei der Bestimmung des Kraftstoffverbrauchs eines Kraftfahrzeugs wünschenswert, da die bekannten standardisierten Fahrzyklen bzw. Versuchspläne zur Ermittlung des Kraftstoffverbrauchs wie der NEFZ auf eher unrealistischen Geschwindigkeitsverläufen basieren. Darüber hinaus wird keine Mehrdimensionalität wie beispielsweise die gleichzeitige Betrachtung der Geschwindigkeit und der Motortemperatur berücksichtigt. Hierzu sind aus dem Stand der Technik jedoch keine Verfahren bekannt, die eine einfache, schnell anpassbare Erstellung eines insbesondere mehrdimensionalen Versuchsplans erlauben, der eine reale Nutzung der Feldmaschine bei der Versuchsmaschine abbildet. DE102004010808 beschreibt ein Verfahren zur Durchführung von Hochdurchsatzexperimenten.

Als Aufgabe der Erfindung wird es daher angesehen, ein Verfahren zur Ermittlung von Stützpunkten eines Versuchsplans bereitzustellen, wobei der Versuchsplan möglichst ein tatsächliches Nutzungsprofil beschreibt, jedoch in einem deutlich kürzeren Zeitraum als bei der tatsächlichen Nutzung vermessen werden kann.

Diese Aufgabe wird erfindungsgemäß durch ein Verfahren zur Ermittlung von Stützpunkten eines Versuchsplans zur Vermessung oder Simulation vorgegebener Versuchsgrößen einer Versuchsmaschine auf Grundlage vorab messtechnisch bestimmter Betriebswerte von Betriebsgrößen mindestens einer Feldmaschine während ihrer bestimmungsgemäßen Verwendung gelöst, wobei in einem Aggregationsschritt die erfassten Betriebswerte nach einer vorgegebenen Klassifikationsregel hinsichtlich einer oder mehrerer ausgewählter Betriebsgrößen Klassen zugeordnet werden, wobei in einem Vorgabeschritt vor oder nach dem Aggregationsschritt Vorgabegrößen ausgewählt werden, wobei die Vorgabegrößen mindestens eine Teilmenge der Betriebsgrößen bilden, wobei in einem auf den Aggregationsschritt nachfolgenden Bestimmungsschritt die Betriebsklassenhäufigkeit für jede Klasse ermittelt wird, und wobei in einem nachfolgenden Ermittlungsschritt die Stützpunkte des Versuchsplans auf Grundlage der Betriebsklassenhäufigkeit ermittelt werden, wobei die Stützpunkte in dem Ermittlungsschritt so bestimmt werden, dass eine Abweichung einer relativen Versuchsklassenhäufigkeit auf Grundlage des Versuchsplans ermittelter und nach der Klassifikationsregel Klassen zugeordneter Vorgabewerte der Vorgabegrößen von einer relativen Betriebsklassenhäufigkeit der nach der Klassifikationsregel klassifizierten Betriebswerte der den Vorgabegrößen entsprechenden Betriebsgrößen gemäß einem vorgegebenen Optimierungskriterium minimiert ist. Auf diese Weise ist es beispielsweise möglich, den Kraftstoffverbrauch eines Kraftfahrzeugs auf Grundlage realistischer Versuchspläne zu bestimmen. Zudem können auf diese Weise wiederum im Hinblick auf die Bestimmung von Kraftstoffverbräuchen beispielsweise auch regionale Unterschiede bei der Nutzung von Kraftfahrzeugen und unterschiedliche Nutzungsprofile von Käufergruppen bestimmter Kraftfahrzeuge berücksichtigt werden. Die Verwendung von Versuchsplänen, die die tatsächliche Verwendung der Feldmaschine abbilden, kann beispielsweise aber auch zur Auslegung von Komponenten neuer Maschinen verwendet werden, da auf diese Weise ein gesamter Lebenszyklus der neuen und in der Versuchsmaschine eingebauten Komponenten auf Grundlage realer Nutzungsprofile bestimmt werden kann.

Bei der Versuchsmaschine kann es sich erfindungsgemäß beispielsweise um ein neu entwickeltes Kraftfahrzeug handeln. Bei der mindestens einen Feldmaschine handelt es sich beispielsweise um ein im normalen Verkehr verwendetes und mit der Versuchsmaschine vergleichbares Serienkraftfahrzeug. Bei der Versuchsgröße kann es sich erfindungsgemäß beispielsweise um einen auf eine 100km-Fahrt bezogenen Kraftstoffverbrauch handeln. Die Betriebsgrößen sind zumindest die den Kraftstoffverbrauch maßgeblich bestimmenden Betriebsgrößen des Kraftfahrzeugs wie beispielsweise die Fahrzeuggeschwindigkeit, die Fahrzeugbeschleunigung, die jeweils gewählten Gänge usw. Die Betriebswerte dieser Betriebsgrößen werden vorteilhafterweise während der Verwendung des Kraftfahrzeugs fortlaufend erfasst und/oder auf Grundlage messtechnisch erfasster und mit Hilfe mathematischer Modelle verarbeiteter Messgrößen bestimmt.

Die unmittelbar messtechnisch ermittelten oder mit Hilfe mathematischer Modelle auf Grundlage von Messwerten bestimmten Betriebswerte werden hinsichtlich einer oder mehrerer ausgewählter Betriebsgrößen klassifiziert. Beispielsweise werden die Betriebswerte der zur Vermessung des Kraftstoffverbrauchs eines Kraftfahrzeugs herangezogenen Betriebsgrößen wie die tatsächlich gefahrenen Geschwindigkeiten einzelnen Klassen wie zum Beispiel 0-30 km/h, 31-50 km/h, 51-100 km/h und > 100 km/h zugeordnet und in dem Bestimmungsschritt die Häufigkeit für jede der Klassen ermittelt, mit der der jeweilige Geschwindigkeitsbereich zuvor erfasst wurde.

Auf Grundlage dieser Häufigkeitswerte wird anschließend der Versuchsplan bzw. werden anschließend die Stützpunkte des Versuchsplans so ermittelt, dass die relative Versuchsklassenhäufigkeit auf Grundlage des Versuchsplans ermittelter und nach der Klassifikationsregel Klassen zugeordneter Vorgabewerte der Vorgabegrößen möglichst den entsprechenden relativen Betriebsklassenhäufigkeiten entsprechen. Auf diese Weise kann ein Versuchsplan bestimmt werden, mit den Geschwindigkeiten angefahren werden, die verhältnismäßig genau so oft wie die real bestimmten Betriebswerte in die Klasse von 31-50 km/h und in die Klasse von 0-30 km/h fallen. Die Versuchsklassenhäufigkeit wird vorteilhafterweise mit Hilfe eines mathematischen Modells der Versuchsmaschine ermittelt. Es ist jedoch auch möglich und erfindungsgemäß vorgesehen, die Versuchsklassenhäufigkeit durch die Durchführung von Versuchen mit der Versuchsmaschine zu bestimmen.

Sofern der Versuchsplan auf Grundlage der Betriebswerte lediglich einer Feldmaschine bestimmt wird, so kann beispielsweise der Kraftstoffverbrauch der Versuchsmaschine vorteilhafterweise kundenindividuell bestimmt und dabei das Fahrverhalten eines jeden Kunden berücksichtigt werden. Sofern das Ziel der Vermessung jedoch die Bestimmung der Versuchsgrößen für eine übliche und von einzelnen Feldmaschinen unabhängige Verwendung der Feldmaschine ist, ist vorteilhafterweise vorgesehen, dass die Betriebswerte bei einer Vielzahl von Feldmaschinen erfasst werden.

Der mit Hilfe des erfindungsgemäßen Verfahrens ermittelte Versuchsplan kann vorteilhafterweise auch zur Optimierung von Betriebsstrategien einer Versuchsmaschine mit Hilfe von repräsentativen Nutzungsprofilen und zur optimalen Parametrierung der Komponenten einer Versuchsmaschine genutzt werden.

Insbesondere sofern die Vorgabegrößen vor der Ermittlung der Betriebsgrößen bereits bekannt sind, ist vorteilhafterweise vorgesehen, dass die Vorgabegrößen den ausgewählten Betriebsgrößen entsprechen. Auf diese Weise kann der für die Bestimmung der Betriebswerte erforderliche Aufwand reduziert werden, da lediglich Betriebswerte zu den Vorgabegrößen entsprechenden Betriebsgrößen bestimmt werden müssen.

Erfindungsgemäß ist alternativ vorgesehen, dass sämtliche relevanten Betriebswerte bei den Feldmaschinen fortlaufend ermittelt und einmalig oder in regelmäßigen Abständen an eine zentrale Datenbank übertragen werden. Auf diese Weise können die Vorgabegrößen zu einem späteren Zeitpunkt flexibel aus den erfassten Betriebsgrößen ausgewählt und so an die Auswahl so an die jeweiligen Anforderungen angepasst werden.

Es ist auch möglich und erfindungsgemäß vorgesehen, dass anstelle der Übertragung der Betriebswerte ausschließlich die Häufigkeitswerte bereits klassifizierter Betriebswerte an die zentrale Datenbank übermittelt werden. Auf diese Weise kann die zu übertragende Datenmenge deutlich reduziert werden. Der Aggregationsschritt erfolgt hierbei bereits beispielsweise auf einem Steuergerät der verschiedenen Feldmaschinen. Auf diese Weise wird auch die Privatsphäre der die Feldmaschine nutzenden Personen geschützt, da ausschließlich aggregierte Daten gespeichert und weiterverwendet werden. Es ist auch möglich und erfindungsgemäß vorgesehen, dass das gesamte Verfahren auf einem Steuergerät einer Feldmaschine durchgeführt wird.

Vorteilhafterweise ist erfindungsgemäß vorgesehen, dass die Betriebswerte unmittelbar nach dem Aggregationsschritt überschrieben und/oder gelöscht werden. Dadurch, dass die Betriebswerte nicht gespeichert werden, kann die Privatsphäre der die Feldmaschine nutzenden Personen besonders gut geschützt werden.

Um den mit dem erfindungsgemäßen Verfahren ermittelten Versuchsplan möglichst gut an das tatsächliche Nutzungsprofil anpassen zu können, ist erfindungsgemäß vorgesehen, dass in dem Aggregationsschritt Transitionshäufigkeiten für eine oder mehrere klassifizierte Betriebsgrößen ermittelt werden, wobei eine Transitionshäufigkeit die Anzahl der Wechsel einer Betriebsgröße bzw. mehrerer Betriebsgrößen von einer Klasse in eine andere Klasse ist, und wobei in dem Ermittlungsschritt die Stützpunkte des Versuchsplans auf Grundlage der Betriebsklassenhäufigkeit und der Transitionshäufigkeiten ermittelt werden, wobei die Stützpunkte in dem Ermittlungsschritt so bestimmt werden, dass eine Abweichung einer relativen Versuchsklassenhäufigkeit auf Grundlage des Versuchsplans ermittelter und nach der Klassifikationsregel Klassen zugeordneter Vorgabewerte der Vorgabegrößen von einer relativen Betriebsklassenhäufigkeit der nach der Klassifikationsregel klassifizierten Betriebswerte der den Voragebgrößen entsprechenden Betriebsgrößen und eine Abweichung von Versuchstransitionshäufigkeiten für die Vorgabegrößen von den Transitionshäufigkeiten für die den Vorgabegrößen entsprechenden Betriebsgrößen gemäß dem vorgegebenen Optimierungskriterium minimiert ist, wobei eine Versuchstransitionshäufigkeit die Anzahl Wechsel einer Vorgabegröße bzw. mehrerer Vorgabegrößen von einer Klasse in eine andere Klasse ist. Auf diese Weise kann der Einfluss der Häufigkeit der Betriebspunktwechsel auf die Versuchsgrößen bei der Ermittlung des Versuchsplans berücksichtigt werden.

Durch die Verwendung der Transitionshäufigkeiten kann in dem oben beispielshaft beschriebenen Versuchsplan zusätzlich zu der Häufigkeit angefahrener Geschwindigkeit auch berücksichtigt werden, wie oft und zwischen welchen Klassen die gefahrene Geschwindigkeit wechselt. Auf diese Weise wird zusätzlich auch berücksichtigt, wie lange die Betriebsgrößen üblicherweise in den jeweiligen Klassen gehalten werden, bevor ein neuer und einer anderen Klasse zugeordneter Betriebswert angefahren wird. Zudem ist es durch die erfindungsgemäße Berücksichtigung mehrerer Betriebsgrößen auch möglich, Transitionshäufigkeiten für den Wechsel mehrerer Betriebsgrößen von einer Klasse bzw. einer Klassenkombination in eine andere zu berücksichtigen. Bei einer Klassenkombination handelt es sich um die Klassen der berücksichtigten Betriebsgrößen, denen die Betriebswerte in dem jeweiligen Zustand zugeordnet werden.

Es ist auch möglich und erfindungsgemäß vorgesehen, dass in dem Aggregationsschritt Transitionsmöglichkeiten für eine oder mehrere klassifizierte Betriebsgrößen ermittelt werden, wobei eine Transitionsmöglichkeit eine Transition ist, deren Transitionshäufigkeit größer Null ist, wobei eine Transitionshäufigkeit die Anzahl der Wechsel einer Betriebsgröße bzw. mehrerer Betriebsgrößen von einer Klasse in eine andere Klasse ist, wobei in dem Ermittlungsschritt die Stützpunkte des Versuchsplans auf Grundlage der Betriebsklassenhäufigkeit und der Transitionsmöglichkeiten ermittelt werden, wobei die Stützpunkte in dem Ermittlungsschritt so bestimmt werden, dass eine Abweichung einer relativen Versuchsklassenhäufigkeit auf Grundlage des Versuchsplans ermittelter und nach der Klassifikationsregel Klassen zugeordneter Vorgabewerte der Vorgabegrößen von einer relativen Betriebsklassenhäufigkeit der nach der Klassifikationsregel klassifizierten Betriebswerte der den Voragebgrößen entsprechenden Betriebsgrößen gemäß dem vorgegebenen Optimierungskriterium minimiert ist, und dass der Versuchsplan ausschließlich solche Versuchstransitionen aufweist, die von den Transitionsmöglichkeiten erfasst sind, wobei die Versuchstransitionen sämtliche Wechsel einer Vorgabegröße bzw. mehrerer Vorgabegrößen von einer Klasse in eine andere Klasse sind. Auf diese Weise kann ein Versuchsplan auf Grundlage der Beriebsklassenhäufigkeiten erstellt werden, der ausschließlich in den erfassten Betriebsgrößen vorhandene und damit physikalisch mögliche Transitionen aufweist.

Zur Bestimmung der Stützpunkte des Versuchsplans ist vorteilhafterweise vorgesehen, dass in dem Ermittlungsschritt mit Hilfe eines Markov-Ketten-Verfahrens auf Basis der Betriebsklassenhäufigkeiten und der Transitionshäufigkeiten die Stützpunkte des Versuchsplans ermittelt werden. Mit Hilfe von Markov-Ketten-Verfahren können auf Grundlage der ermittelten Häufigkeiten Klassen ausgewählt werden, in denen die Vorgabegrößen des nächsten Stützpunkts des Versuchsplans liegen, wobei der sich mit Hilfe des Markov-Ketten-Verfahrens ergebende Versuchsplan Versuchsklassenhäufigkeiten und Versuchstransitionshäufigkeiten aufweist, die sich bei einem genügend langen Versuchsplan bzw. bei einem Versuchsplan mit einer ausreichenden Anzahl von Stützpunkten den Betriebsklassenhäufigkeiten und insbesondere den Transitionshäufigkeiten stark annähern oder diesen entsprechen können.

Um einfach beispielsweise für unterschiedliche Versuchsanforderungen Versuchspläne ermitteln zu können, ist erfindungsgemäß vorgesehen, dass in dem Ermittlungsschritt mit Hilfe eines Markov-Ketten-Verfahrens auf Basis der Betriebsklassenhäufigkeiten und der Transitionshäufigkeiten Stützpunkte eines Ausgangsversuchsplans ermittelt werden. Der Ausgangsversuchsplan wird auf die gleiche Art und Weise mit Hilfe des Markov-Ketten-Verfahrens wie der voranstehend beschriebene Versuchsplan ermittelt. Allerdings weist der Ausgangsversuchsplan besonders viele Stützpunkte auf und dient als Grundlage für die nachfolgenden Erstellung eines oder mehrerer Versuchspläne. Vorteilhafterweise weist der Ausgangsversuchsplan 3- bis 4-mal so viele Stützstellen auf, wie der auf Grundlage des Ausgangsversuchsplans zu ermittelnde Versuchsplan und besonders vorteilhafterweise 10-mal so viele Stützstellen auf.

Zur Bestimmung verschiedener Versuchspläne aus dem Ausgangsversuchsplan ist erfindungsgemäß vorgesehen, dass in dem Ermittlungsschritt im Anschluss an die Bestimmung des Ausgangsversuchsplans der Ausgangsversuchsplan mit Hilfe eines Segmentierungsverfahrens in Ausgangsversuchsplansegmente unterteilt wird. Die Ausgangsversuchsplansegmente können dann mit Hilfe eines geeigneten Verfahrens, vorteilhafterweise eines Zufallverfahrens zu einem oder mehreren neuen Versuchsplänen kombiniert werden.

Vorteilhafterweise ist erfindungsgemäß vorgesehen, dass für die Segmentierung für mindestens eine Ausgangsvorgabegröße des Ausgangsversuchsplans jeweils mindestens ein Zustandswert vorgegeben wird und dass die Ausgangsversuchsplansegemente so erzeugt werden, dass jeder erste und letzte Ausgangsvorgabewert jeder Ausgangsvorgabegröße für die mindestens ein Zustandswert vorgegeben wurde den jeweiligen Zustandswert aufweist. Auf diese Weise kann unter anderem erreicht werden, dass die aus den Ausgangsversuchsplansegementen zusammengestellten Versuchspläne einen kontinuierlich Signalverlauf und keine unerwünschten Transitionen und insbesondere keine Transitionen, die nicht in den Transitionsmöglichkeiten enthalten sind, zwischen aufeinanderfolgenden Stützpunkten an den Stellen aufweisen, an denen verschiedene Ausgangsversuchsplansegemente miteinander kombiniert bzw. zusammengesetzt wurden.

Vorteilhafterweise ist erfindungsgemäß vorgesehen, dass für die Segmentierung für mindestens zwei Ausgangsvorgabegrößen des Ausgangsversuchsplans jeweils mindestens ein Zustandswert vorgegeben wird und dass die Ausgangsversuchsplansegemente so erzeugt werden, dass jeder erste und letzte Ausgangsvorgabewert jeder Ausgangsvorgabegröße für die mindestens ein Zustandswert vorgegeben wurde den jeweiligen Zustandswert aufweist. Auf diese Art und Weise können mit dem efindungsgemäßen Verfahren einfach mehrdimensionale Versuchspläne erstellt werden. Durch eine derartige Segmentierung können mehrdimensionale Ausgangsversuchsplansegmente erzeugt werden, wobei ein kontinuierlicher Übergang zwischen den Ausgangsversuchsplansegmenten bei den auf Basis dieser Ausgangsversuchsplansegmente generierten Versuchspläne in allen Dimensionen ermöglicht wird. Beispielsweise werden für die Ermittlung eines Versuchsplans zur Vermessung eines Kraftfahrzeugs als Betriebsgrößen die gefahrene Geschwindigkeit und die Beschleunigung der Feldmaschinen herangezogen und die jeweiligen Betriebswerte in dem Aggregationsschritt Klassen zugeordnet sowie die Transitionshäufigkeiten ermittelt. Anschließend wird mit Hilfe des Markov-Ketten-Verfahrens ein Ausgangsversuchsplan erstellt. Dieser Ausgangsversuchsplan wird dann mit Hilfe des Segmentierungsverfahrens segmentiert, wobei die Ausgangsversuchsplansegemente so erzeugt werden, dass jeder erste und letzte Ausgangsversuchswert jeder Ausgangsvorgabegröße für die mindestens ein Zustandswert vorgegeben wurde den jeweiligen Zustandswert aufweist. Beispielsweise werden für die Segmentierung Zustandswerte sowohl für die Beschleunigung als auch für die Geschwindigkeit vorgegeben. Eine Segmentierung kann dabei beispielsweise erfolgen, wenn in dem Ausgangsversuchsplan sowohl die Geschwindigkeit als auch die Beschleunigung eine der vorgegebenen Kombinationen der Zustandswerte für die Geschwindigkeit und die Beschleunigung aufweist. Zum Beispiel wird der Ausgangsversuchsplan an den Stellen segmentiert, an denen die Geschwindigkeit und die Beschleunigung Null ist und an den Stellen segmentiert, an denen die Geschwindigkeit 10km/h beträgt und die Beschleunigung Null ist.

Die Kombinationen der Zustandswerte für die Segmentierung werden vorteilhafterweise unter Berücksichtigung der Betriebsklassenhäufigkeiten vorgegeben, wobei die Kombinationen der Zustandswerte vorteilhafterweise aus den Klassen ausgewählt werden, die vergleichsweise große Betriebsklassenhäufigkeiten aufweisen. Auf diese Weise können zahlreiche Ausgangsversuchsplansegmente erstellt werden.

Vorteilhafterweise ist erfindungsgemäß vorgesehen, dass mit Hilfe des erfindungsgemäßen Verfahrens mehrdimensionale Versuchspläne erstellt werden. Erfindungsgemäß erfolgt die Segmentierung mit dem Segmentierungsverfahren daher ebenfalls in mehreren Dimensionen bzw. bezüglich mehrerer Vorgabegrößen.

Um auf Grundlage der ermittelten Ausgangsversuchsplansegmente einen oder mehrere Versuchspläne zu ermitteln, ist erfindungsgemäß vorgesehen, dass nachfolgend die Ausgangsversuchsplansegmente mit einem Zufallsverfahren zu dem Versuchsplan so zusammengestellt werden, dass das vorgegebene Optimierungskriterium minimiert ist.

Bei einer besonders vorteilhaften Ausgestaltung des erfindungsgemäßen Verfahren ist vorgesehen, dass nachfolgend aus den Ausgangsversuchsplansegmenten mit mindestens einem Zufallsverfahren zahlreiche Kandidatenversuchspläne zusammengestellt werden und dass nachfolgend die Kandidatenversuchspläne hinsichtlich des Optimierungskriteriums bewertet werden und der Kandidatenversuchsplan als Versuchsplan ausgewählt wird, der das Optimierungskriterium minimiert. Auf diese Weise können auf Grundlage der vorliegenden Ausgangsversuchsplansegmente hinsichtlich verschiedener Versuchsplananforderungen geeignete Kandidatenversuchspläne erstellt werden und aus diesen Kandidatenversuchsplänen der oder die Besten, das heißt das Optimierungskriterium möglichst minimierende, Versuchspläne ausgewählt werden.

Zur Bestimmung der Stützpunkte des Versuchsplans ist vorteilhafterweise vorgesehen, dass in einem Altversuchsauswertungsschritt auf Grundlage bereits vorliegender Altversuchspläne Altversuchsbetriebswerte von Altversuchsbetriebsgrößen ermittelt werden, wobei die Altversuchsbetriebswerte die Betriebswerte bilden und nach der Klassifikationsregel Klassen zugeordnet werden und wobei in dem Ermittlungsschritt die Stützpunkte aus Abschnitten der Altversuchspläne ermittelt werden, wobei die Abschnitte so ausgewählt werden, dass eine Abweichung einer relativen Versuchsklassenhäufigkeit der auf Grundlage des Versuchsplans ermittelten und nach der Klassifikationsregel Klassen zugeordneten Versuchswerte von einer relativen Betriebsklassenhäufigkeit der nach der Klassifikationsregel klassifizierten Altversuchsbetriebswerte gemäß dem vorgegebenen Optimierungskriterium minimiert ist. Auf diese Weise kann der neue Versuchsplan aus Abschnitten eines oder mehrerer alter Versuchspläne zusammengesetzt werden.

Vorteilhafterweise ist erfindungsgemäß vorgesehen, dass die Ermittlung der Abschnitte der Altversuchspläne mit einem wie vorangehend beschriebenen Segmentierungsverfahren erfolgt.

Vorteilhafterweise ist erfindungsgemäß vorgesehen, dass die Altversuchsbetriebswerte an einer der Versuchsmaschine vergleichbaren Altversuchsmaschine ermittelt werden. Auf diese Weise kann erreicht werden, dass die den Stützpunkten zugeordneten Maschinenparameterwerte von der Versuchsmaschine auch erreicht und angefahren werden können.

Vorteilhafterweise ist erfindungsgemäß vorgesehen, dass die Altversuchsbetriebswerte messtechnisch ermittelt werden. Zu diesem Zweck werden vorteilhafterweise Aufzeichnungen von bei realen Vermessungen erfasster Altversuchsbetriebsgrößen verwendet.

Es ist jedoch auch möglich und erfindungsgemäß vorgesehen, dass die Altversuchsbetriebswerte durch ein mathematisches Modell der Versuchsmaschine oder der Altversuchsmaschine ermittelt werden. Auf diese Weise kann der Aufwand zur Bestimmung der Altversuchsbetriebswerte deutlich reduziert und auch Altversuchspläne zur Bestimmung der Stützpunkte des Versuchsplans verwendet werden, zu denen keine real ermittelten Betriebsgrößen vorliegen.

Vorteilhafterweise ist erfindungsgemäß vorgesehen, dass die Versuchswerte durch ein mathematisches Modell der Versuchsmaschine ermittelt werden. Hierfür werden vorteilhafterweise bei der Vermessung mit dem Versuchsplan messtechnisch erfasste Betriebsparameter der Versuchsmaschine in dem mathematischen Modell verarbeitet.

Weitere Vorteilhafte Ausgestaltungen des erfindungsgemäßen Verfahrens werden anhand von in der Zeichnung dargestellten Ausführungsbeispielen näher erläutert.

Es zeigt:
Figur 1 ein schematisch dargestelltes Ablaufdiagramm des erfindungsgemäßen Verfahrens,
Figur 2 ein schematisch dargestelltes Ablaufdiagramm des Aggregationsschritts,
Figur 3 ein schematisch dargestelltes Ablaufdiagramm des Ermittlungsschritts bei Verwendung von Altversuchsplänen,
Figur 4 ein schematisch dargestelltes Ablaufdiagramm des Ermittlungsschritts unter Verwendung eines parametrisierbaren Standardversuchsplans,
Figur 5 eine schematische Darstellung eines Zusammenhangs zwischen Betriebsklassenhäufigkeiten und Transitionshäufigkeiten und
Figur 6 eine schematische Darstellung des Ablaufs eines Segmentierungsverfahrens.

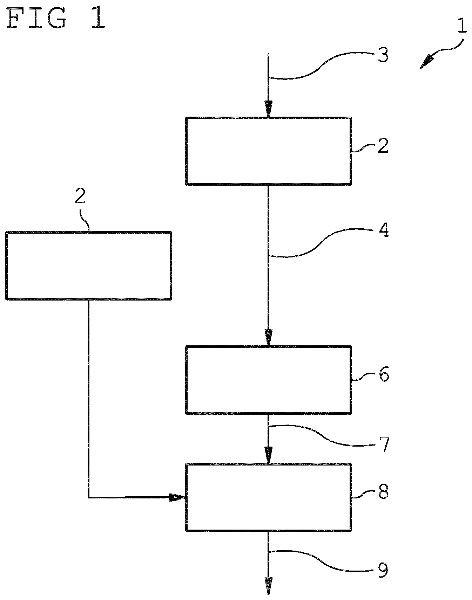

Fig. 1 zeigt schematisch ein Ablaufdiagramm des erfindungsgemäßen Verfahrens 1. In einem Aggregationsschritt 2 werden messtechnisch bestimmte Betriebswerte 3 mindestens einer Feldmaschine nach einer vorgegebenen Klassifikationsregel Klassen 4 zugeordnet. In einem auf den Aggregationsschritt 2 nachfolgenden Vorgabeschritt 5 werden Vorgabegrößen ausgewählt. Bei den Vorgabegrößen handelt es sich um Betriebsgrößen der Versuchsmaschine, die einen maßgeblichen Einfluss auf die Versuchsgrößen haben und daher bei der Vermessung der Versuchsmaschine entsprechend dem zu bestimmenden Versuchsplan variiert werden sollen.

Anschließend wird in einem Bestimmungsschritt 6 die Betriebsklassenhäufigkeit für jede Klasse 4 ermittelt, in die die Betriebswerte 3 zuvor eingeordnet wurden. Auf Grundlage der so ermittelten Betriebsklassenhäufigkeiten 7 wird in einem Ermittlungsschritt 8 mit Hilfe eines geeigneten Optimierungsverfahrens ein Versuchsplan 9 bestimmt.

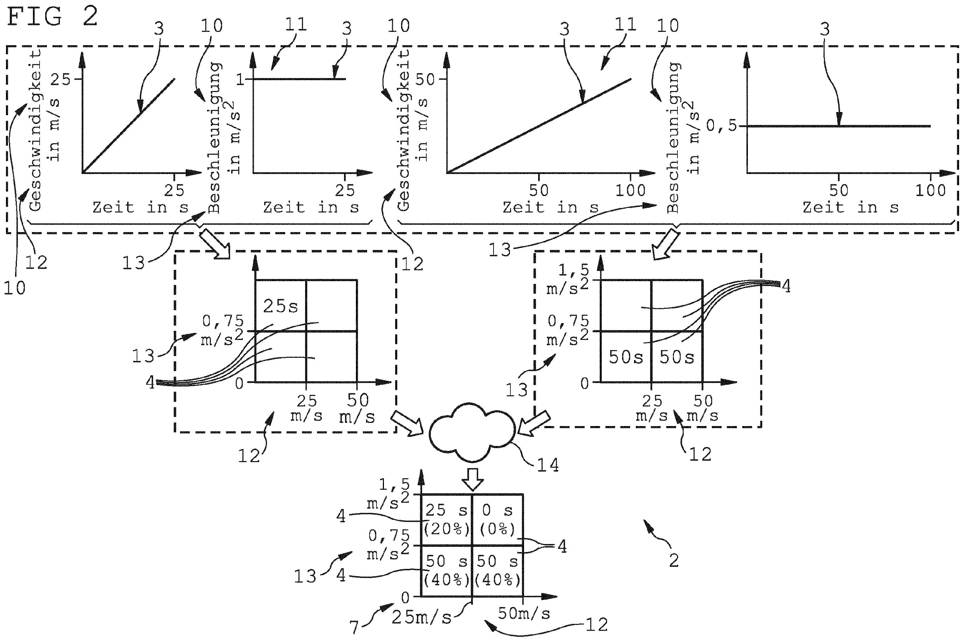

Figur 2 zeigt schematisch einen erfindungsgemäß möglichen Ablauf des Aggregationsschritts 2. Zunächst werden Betriebswerte 3 von Betriebsgrößen 10 mehrerer Feldmaschinen 11 messtechnisch erfasst. Bei den Betriebsgrößen 10 handelt es sich um die Geschwindigkeit 12 und die Beschleunigung 13 verschiedener Kraftfahrzeuge.

Anschließend werden die erfassten Betriebswerte 3 gemäß einer vorgegebenen Klassifikationsregel bezüglich der Geschwindigkeit 12 und der Beschleunigung 13 Klassen 4 zugeordnet. Die jeweils für die Feldmaschinen 11 getrennt erfolgte Zuordnung wird anschließend zusammengeführt und die so ermittelten Betriebsklassenhäufigkeiten 7 in einer Datenbank 14 gespeichert. Den Betriebsklassenhäufigkeiten 7 kann entnommen werden, wie lange die Feldmaschinen 11 jeweils die klassifizierten Geschwindigkeits- und Beschleunigungskombinationen gefahren sind.

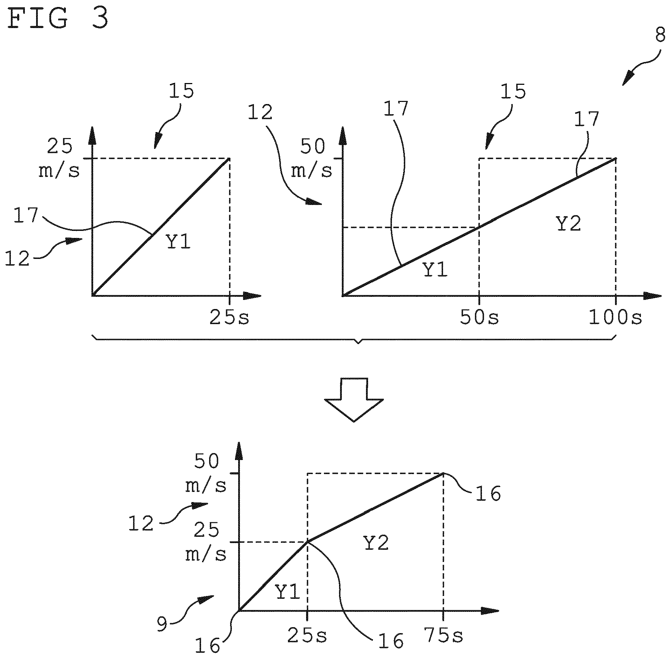

In Figur 3 ist schematisch der Ablauf eines Ermittlungsschritts 8 dargestellt. Auf Grundlage bereits vorliegender Altversuchspläne 15 werden in dem Ermittlungsschritt 8 die Stützpunkte 16 eines Versuchsplans 9 aus Abschnitten 17 der Altversuchspläne 15 ermittelt.

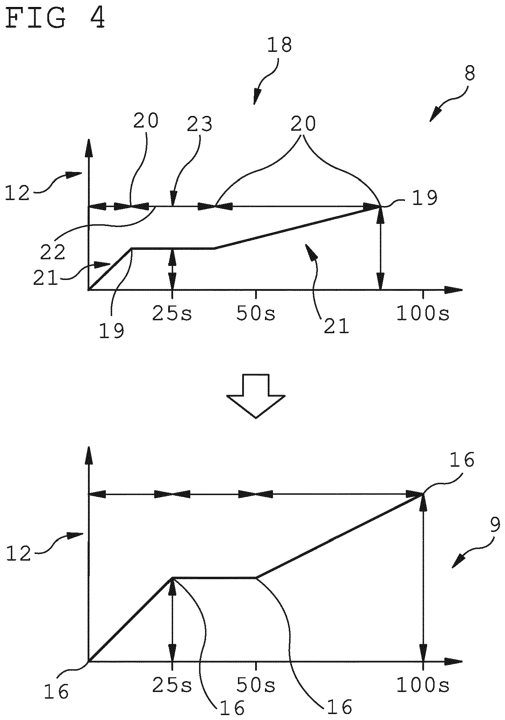

Figur 4 zeigt ein schematisch dargestelltes Ablaufdiagramm des Ermittlungsschritts 8 unter Verwendung eines parametrisierbaren Standardversuchsplans 18. Der Standardversuchsplan 18 weist einen vordefinierten Verlauf der Geschwindigkeit 12 auf. Sowohl Geschwindigkeitswerte 19 als auch Zeitpunkte 20, zu denen die Geschwindigkeitswerte 19 erreicht werden sollen, können in Variationsabschnitten 21 des Standardversuchsplans 18 vorgegeben werden. Eine Zeitdauer 22 eines Vorgabeabschnitts 23 kann in diesem Beispiel nicht vorgegeben werden. Es ist aber auch möglich und erfindungsgemäß vorgesehen, dass sämtliche Parameter frei wählbar sind. Durch ein geeignetes Optimierungsverfahren werden die Geschwindigkeitswerte 19 und die Zeitpunkte 20 des Standardversuchsplans 18 so angepasst, dass eine Abweichung einer relativen Versuchsklassenhäufigkeit auf Grundlage des Versuchsplans 9 ermittelter und nach der Klassifikationsregel Klassen zugeordneter Vorgabewerte der Vorgabegrößen von einer relativen Betriebsklassenhäufigkeit der nach der Klassifikationsregel klassifizierten Betriebswerte der den Vorgabegrößen entsprechenden Betriebsgrößen gemäß einem vorgegebenen Optimierungskriterium minimiert ist.

Erfindungsgemäß ist es alternativ auch möglich, die Stützpunkte sowie die Anzahl der Stützpunkte mit einem geeigneten Optimierungsverfahren von Null an zu bestimmen.

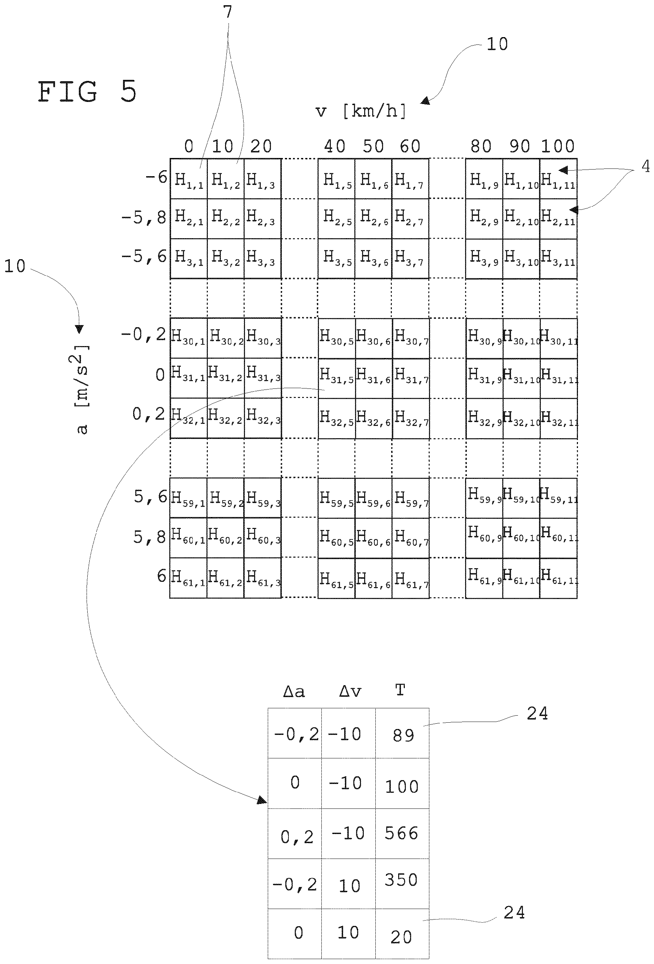

Figur 5 zeigt eine schematische Darstellung des Zusammenhangs zwischen Betriebsklassenhäufigkeiten 7 (H) und Transitionshäufigkeiten 24 (T). In der Darstellung sind einzelne Betriebsklassenhäufigkeiten 7 und Transitionshäufigkeiten 24 mit einem Bezugszeichen gekennzeichnet.

In einem Aggregationsschritt wurden zunächst Betriebswerte Betriebsgrößen 10 mehrerer Feldmaschinen messtechnisch erfasst. Bei den Betriebsgrößen 10 handelt es sich um die Geschwindigkeit v und die Beschleunigung a verschiedener Kraftfahrzeuge.

Anschließend wurden die erfassten Betriebswerte gemäß einer vorgegebenen Klassifikationsregel bezüglich der Geschwindigkeit v und der Beschleunigung a Klassen 4 zugeordnet. In der Darstellung sind einzelne Klassen 4 mit einem Bezugszeichen gekennzeichnet.

Zu jeder Klasse 4 wurden zudem mehrere Transitionshäufigkeiten 24 bestimmt. In der Darstellung sind exemplarisch Transitionshäufigkeiten T einer Klasse H_{31,5} dargestellt. Die Transitionshäufigkeiten T geben in Abhängigkeit einer Beschleunigungsänderung Δa und einer Geschwindigkeitsänderung Δv an, wie häufig sich die Betriebswerte ausgehend von der Klasse H_{31,5} entsprechend der Beschleunigungsänderungen Δa und der Geschwindigkeitsänderung Δv ändern.

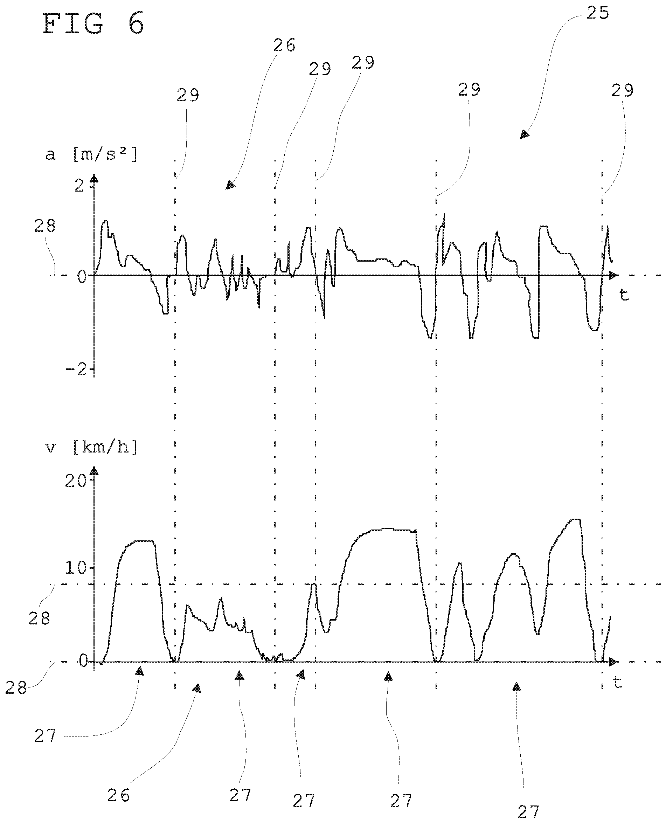

In der Figur 6 ist schematisch das Prinzip eines Segmentierungsverfahrens dargestellt. In einem Ermittlungsschritt wurde ein Ausgangsversuchsplan 25 mit Hilfe eines Markov-Ketten-Verfahrens erstellt. Bei Ausgangsvorgabegrößen 26 des Ausgangsversuchsplan 25 handelt es sich um eine Beschleunigung a und eine Geschwindigkeit v.

Auf Grundlage des Ausgangsversuchsplans 25 sollen Ausgangsversuchsplansegemente 27 bestimmt werden. Für die Segmentierung wurden Zustandswerte 28 der Ausgangsvorgabegrößen 26 vorgegeben. Die Segmentierung soll jeweils bei einer Beschleunigung a = 0m/s² und einer Geschwindigkeit von entweder v = 0km/h oder v = 8km/h erfolgen. An diesen Stellen (a = 0m/s² und v = 0km/h; a= 0m/s² und v = 8km/h) wird der Ausgangsversuchsplan 25 jeweils unterteilt. Stützpunkte 16 des Ausgangsversuchsplans 25, die zwischen zwei Unterteilungsstellen 29 liegen, bilden zusammen ein Ausgangsversuchsplansegment 27.

## Patentansprüche

1. Verfahren (1) zur Ermittlung von Stützpunkten (16) eines Versuchsplans (9) zur Vermessung vorgegebener Versuchsgrößen einer Versuchsmaschine auf Grundlage vorab messtechnisch bestimmter Betriebswerte (3) von Betriebsgrößen mindestens einer Feldmaschine (11) während ihrer bestimmungsgemäßen Verwendung, wobei in einem Aggregationsschritt (2) die erfassten Betriebswerte (3) nach einer vorgegebenen Klassifikationsregel hinsichtlich einer oder mehrerer ausgewählter Betriebsgrößen Klassen (4) zugeordnet werden, wobei in einem Vorgabeschritt (5) vor oder nach dem Aggregationsschritt (2) Vorgabegrößen ausgewählt werden, wobei die Vorgabegrößen mindestens eine Teilmenge der Betriebsgrößen bilden, wobei in einem auf den Aggregationsschritt (2) nachfolgenden Bestimmungsschritt (6) die Betriebsklassenhäufigkeit (7) für jede Klasse (4) ermittelt wird, und wobei in einem nachfolgenden Ermittlungsschritt (8) die Stützpunkte (16) des Versuchsplans (9) auf Grundlage der Betriebsklassenhäufigkeit (7) ermittelt werden, wobei die Stützpunkte (16) in dem Ermittlungsschritt (8) so bestimmt werden, dass eine Abweichung einer relativen Versuchsklassenhäufigkeit auf Grundlage des Versuchsplans (9) ermittelter und nach der Klassifikationsregel Klassen (4) zugeordneter Vorgabewerte der Vorgabegrößen von einer relativen Betriebsklassenhäufigkeit der nach der Klassifikationsregel klassifizierten Betriebswerte (3) der den Vorgabegrößen entsprechenden Betriebsgrößen gemäß einem vorgegebenen Optimierungskriterium minimiert ist.

2. Verfahren (1) gemäß Anspruch 1, **dadurch gekennzeichnet, dass** die Betriebswerte (3) unmittelbar nach dem Aggregationsschritt (2) überschrieben und/oder gelöscht werden.

3. Verfahren (1) gemäß Anspruch 1 oder Anspruch 2, **dadurch gekennzeichnet, dass** die Betriebswerte (3) bei einer Vielzahl von Feldmaschinen (11) erfasst werden.

4. Verfahren (1) gemäß einem der voranstehenden Ansprüche, **dadurch gekennzeichnet, dass** die Vorgabegrößen den ausgewählten Betriebsgrößen entsprechen.

5. Verfahren (1) gemäß einem der voranstehenden Ansprüche, **dadurch gekennzeichnet, dass** in dem Aggregationsschritt (2) Transitionshäufigkeiten für eine oder mehrere klassifizierte Betriebsgrößen ermittelt werden, wobei eine Transitionshäufigkeit (24) die Anzahl der Wechsel einer Betriebsgröße bzw. mehrerer Betriebsgrößen von einer Klasse (4) in eine andere Klasse (4) ist, und wobei in dem Ermittlungsschritt (8) die Stützpunkte (16) des Versuchsplans (9) auf Grundlage der Betriebsklassenhäufigkeit (7) und der Transitionshäufigkeiten (24) ermittelt werden, wobei die Stützpunkte (16) in dem Ermittlungsschritt (8) so bestimmt werden, dass eine Abweichung einer relativen Versuchsklassenhäufigkeit auf Grundlage des Versuchsplans (9) ermittelter und nach der Klassifikationsregel Klassen (4) zugeordneter Vorgabewerte der Vorgabegrößen von einer relativen Betriebsklassenhäufigkeit der nach der Klassifikationsregel klassifizierten Betriebswerte (3) der den Vorgabegrößen entsprechenden Betriebsgrößen und eine Abweichung von Versuchstransitionshäufigkeiten für die Vorgabegrößen von den Transitionshäufigkeiten für die den Vorgabegrößen entsprechenden Betriebsgrößen gemäß dem vorgegebenen Optimierungskriterium minimiert ist, wobei eine Versuchstransitionshäufigkeit die Anzahl Wechsel einer Vorgabegröße bzw. mehrerer Vorgabegrößen von einer Klasse (4) in eine andere Klasse (4) ist.

6. Verfahren (1) gemäß Anspruch 5, **dadurch gekennzeichnet, dass** in dem Ermittlungsschritt (8) mit Hilfe eines Markov-Ketten-Verfahrens auf Basis der Betriebsklassenhäufigkeiten (7) und der Transitionshäufigkeiten (24) die Stützpunkte (16) des Versuchsplans (9) ermittelt werden.

7. Verfahren (1) gemäß Anspruch 5, **dadurch gekennzeichnet, dass** in dem Ermittlungsschritt (8) mit Hilfe eines Markov-Ketten-Verfahrens auf Basis der Betriebsklassenhäufigkeiten (7) und der Transitionshäufigkeiten (24) Stützpunkte (16) eines Ausgangsversuchsplans (25) ermittelt werden.

8. Verfahren (1) gemäß Anspruch 7, **dadurch gekennzeichnet, dass** in dem Ermittlungsschritt (8) im Anschluss an die Bestimmung des Ausgangsversuchsplans (25) der Ausgangsversuchsplan (25) mit Hilfe eines Segmentierungsverfahrens in ein- oder mehrdimensionale Ausgangsversuchsplansegmente (27) unterteilt wird.

9. Verfahren (1) gemäß Anspruch 8, **dadurch gekennzeichnet, dass** für die Segmentierung für mindestens eine Ausgangsvorgabegröße (26) des Ausgangsversuchsplans (25) jeweils mindestens ein Zustandswert (28) vorgegeben wird und dass die Ausgangsversuchsplansegemente (27) so erzeugt werden, dass jeder erste und letzte Ausgangsvorgabewert jeder Ausgangsvorgabegröße (26) für die mindestens ein Zustandswert (28) vorgegeben wurde den jeweiligen Zustandswert (28) aufweist.

10. Verfahren (1) gemäß Anspruch 9, **dadurch gekennzeichnet, dass** für die Segmentierung für mindestens zwei Ausgangsvorgabegrößen (26) des Ausgangsversuchsplans (25) jeweils mindestens ein Zustandswert (28) vorgegeben wird und dass die Ausgangsversuchsplansegemente (27) so erzeugt werden, dass jeder erste und letzte Ausgangsvorgabewert jeder Ausgangsvorgabegröße (26) für die mindestens ein Zustandswert (28) vorgegeben wurde den jeweiligen Zustandswert (28) aufweist.

11. Verfahren (1) gemäß einem der Ansprüche 8 bis 10, **dadurch gekennzeichnet, dass** nachfolgend die Ausgangsversuchsplansegmente (27) mit einem Zufallsverfahren zu dem Versuchsplan (9) so zusammengestellt werden, dass das vorgegebene Optimierungskriterium minimiert ist.

12. Verfahren (1) gemäß einem der Ansprüche 8 bis 10, **dadurch gekennzeichnet, dass** nachfolgend aus den Ausgangsversuchsplansegmenten (27) mit mindestens einem Zufallsverfahren zahlreiche Kandidatenversuchspläne zusammengestellt werden und dass nachfolgend die Kandidatenversuchspläne hinsichtlich des Optimierungskriteriums bewertet werden und der Kandidatenversuchsplan als Versuchsplan (9) ausgewählt wird, der das Optimierungskriterium minimiert.

13. Verfahren (1) gemäß einem der Ansprüche 1 bis 5, **dadurch gekennzeichnet, dass** in einem Altversuchsauswertungsschritt auf Grundlage bereits vorliegender Altversuchspläne (15) Altversuchsbetriebswerte von Altversuchsbetriebsgrößen ermittelt werden, wobei die Altversuchsbetriebswerte die Betriebswerte (3) bilden und nach der Klassifikationsregel Klassen (4) zugeordnet werden und wobei in dem Ermittlungsschritt (8) die Stützpunkte (16) aus Abschnitten (17) der Altversuchspläne (15) ermittelt werden, wobei die Abschnitte (17) so ausgewählt werden, dass eine Abweichung einer relativen Versuchsklassenhäufigkeit der auf Grundlage des Versuchsplans (9) ermittelten und nach der Klassifikationsregel Klassen (4) zugeordneten Vorgabewerte von einer relativen Betriebsklassenhäufigkeit der nach der Klassifikationsregel klassifizierten Altversuchsbetriebswerte gemäß dem vorgegebenen Optimierungskriterium minimiert ist.

14. Verfahren (1) gemäß Anspruch 13, **dadurch gekennzeichnet, dass** die Altversuchsbetriebswerte an einer der Versuchsmaschine vergleichbaren Altversuchsmaschine ermittelt werden.

15. Verfahren (1) gemäß Anspruch 13 oder Anspruch 14, **dadurch gekennzeichnet, dass** die Altversuchsbetriebswerte messtechnisch ermittelt werden.

16. Verfahren (1) gemäß Anspruch 13 oder Anspruch 14, **dadurch gekennzeichnet, dass** die Altversuchsbetriebswerte durch ein mathematisches Modell der Versuchsmaschine oder der Altversuchsmaschine ermittelt werden.

17. Verfahren (1) gemäß einem der voranstehenden Ansprüche, **dadurch gekennzeichnet, dass** die Vorgabewerte durch ein mathematisches Modell der Versuchsmaschine ermittelt werden.

## Claims

1. A method (1) for the determination of support points (16) of a test plan (9) for measuring pre-defined test variables of a test machine on the basis of previously measured operating values (3) of operating variables of at least one machine from the field (11) during the intended use thereof, wherein, in an aggregation step (2), the recorded operating values (3) are allocated to classes (4) with regard to one or more selected operating variables, according to a predefined classification rule, wherein in a specification step (5), prior to or after the aggregation step (2), specification variables are selected, wherein the specification variables form at least one subset of the operating variables, wherein, in a determination step (6) following the aggregation step (2), the operating class frequency (7) is identified for each class (4), and wherein in a subsequent identification step (8) the support points (16) for the test plan are identified on the basis of the operating class frequency (7), wherein the support points (16) are determined in the identification step (8) such that a deviation of a relative test class frequency of specification values of the specification variables identified on the basis of the test plan (9) and assigned to classes (4) according to the classification rule, from a relative operating class frequency of the operating values (3), classified according to the classification rule, of the operating variables corresponding to the specification values is minimized according to a specified optimization criterion.

2. The method according to claim 1, **characterized in that** the operating values (3) are overwritten and/or deleted directly after the aggregation step (2).

3. The method according to claim 1 or claim 2, **characterized in that** the operating values (3) are measured for a plurality of machines from the field (1).

4. Method according to any one of the preceding claims, **characterized in that** the specification variables correspond to the selected operating variables.

5. Method (5) according to any one of the preceding claims, **characterized in that** in the aggregation step (2), transition frequencies are identified for one or multiple classified operation variables, wherein a transition frequency (24) is the number of changes of an operating variable or multiple operating variables from one class (4) to another class (4), and wherein in the identification step (8), the support points (16) of the test plan (9) are identified on the basis of the operating class frequency (7) and the transition frequencies (24), wherein the support points (16) are identified in the identification step (8) in such a way that a deviation of a relative test class frequency of specification values of the specification variables identified on the basis of the test plan (9) and assigned to classes (4) according to the classification rule, from a relative operating class frequency of the operating values (3), classified according to the classification rule, of the operating variables corresponding to the specification values, and a deviation of test transition frequencies for the specification values from the transition frequencies for the operating variables corresponding to the specification variables is minimized according to the specified optimization criterion, wherein a test transition frequency is the number of changes of a specification variable or of multiple specification variables from one class (4) to another class (4).

6. The method (1) according to claim 5, **characterized in that** in the identification step (8), the support points (16) of the test plan (9) are identified, using a Markov chain method, on the basis of the operating class frequencies (7) and the transition frequencies (24).

7. The method (1) according to claim 5, **characterized in that** in the identification step (8), support points (16) of an initial test plan (25) are identified, using a Markov chain method, on the basis of the operating class frequency (7) and the transition frequencies (24).

8. The method (1) according to claim 7, **characterized in that** in the identification step (8), subsequent to the determination of the initial test plan (25), the initial test plan (25) is sub-divided into one-dimensional or multidimensional initial test plan segments (27) using a segmentation method.

9. The method (1) according to claim 8, **characterized in that** for the segmentation in each case at least one status value (28) is predefined for at least one initial specification variable (26) of the initial test plan (25), and that the initial test plan segments (27) are generated such that each first and each last initial specification value of each initial specification variable (26), for which at least one status value (28) was predefined, comprises the respective status value (28).

10. The method (1) according to claim 9, **characterized in that** for the segmentation for at least two initial specification variables (26) of the initial test plan (25), in each case at least one status value (28) is specified, and that the initial test plan segments (27) are generated such that each first and each last initial specification value of each initial specification variable (26), for which at least one status value (28) was predefined, comprises the respective status value (28).

11. The method (1) according to one of claims 8 to 10, **characterized in that** subsequently, the initial test plan segments (27) are composed to form the test plan (9) using a random method in such a way, that the predefined optimization criterion is minimized.

12. The method (1) according to one of claims 8 to 10, **characterized in that** subsequently, numerous candidate test plans are generated from the initial test plan segments (27) using at least one random method, and that subsequently, the candidate test plans are rated in view of the optimization criterion and the candidate test plan is selected as the test plan (9) that minimizes the optimization criterion.

13. The method (1) according to one of claims 1 to 5, **characterized in that** in an old test evaluation step on the basis of already present old test plans (15), old test operating values of old test operating variables are identified, wherein the old test operating values form the operating values (3) and, according to the classification rule, are assigned to classes (4), and wherein in the identification step (8) the support points (16) are identified from sections (17) of the old test plans (15), wherein the sections (17) are selected such, that a deviation of a relative test class frequency of specification values identified on the basis of the test plan (9) and assigned to classes (4) according to the classification rule from a relative operating class frequency of the old test operation values classified according to the classification rule, is minimized according to the specified optimization criterion.

14. The method (1) according to claim 13, **characterized in that** the old test operating values are identified on an old test machine comparable to the test machine.

15. The method (1) according to claim 13 or claim 14, **characterized in that** the old test operating values are identified by measuring.

16. The method (1) according to claim 13 or claim 14, **characterized in that** the old test operating values are identified by a mathematical model of the test machine or of the old test machine.

17. The method (1) according to one of the preceding claims, **characterized in that** the specification values are identified by a mathematical model of the test machine.

## Revendications

1. Procédé (1) servant à déterminer des points de référence (16) d'un plan d'essai(9) servant à mesurer des grandeurs d'essai prédéfinies d'un véhicule d'essai sur la base de valeurs de fonctionnement définies au préalable par une technique de mesure (3) issues de grandeurs de fonctionnement d'au moins un véhicule de terrain (11) dans le cadre d'une utilisation normale, selon lequel, lors d'une étape d'agrégation (2), les valeurs de fonctionnement (3) considérées sont assignées à des classes selon une règle de classement prédéfinie au regard d'une ou plusieurs des grandeurs de fonctionnement sélectionnées, (4), selon lequel lors d'une étape de spécification (5), des grandeurs de spécification sont sélectionnées avant ou après l'étape d'agrégation (2), selon lequel les grandeurs de spécification représentent au moins une partie des grandeurs de fonctionnement, selon lequel lors d'une étape de définition (6) suivant l'étape d'agrégation (2), la fréquence d'occurrence des classes de fonctionnement (7) est déterminée pour chaque classe (4), et selon lequel, lors d'une étape de caractérisation (8) qui suit, les points de référence (16) du plan d'essai(9) sont déterminés sur la base de la fréquence d'occurrence des classes de fonctionnement (7), selon lequel les points de référence (16) sont définis lors de l'étape de caractérisation (8) de telle sorte qu'un écart entre une fréquence d'occurrence relative des classes d'essai au regard des valeurs de spécification des grandeurs de spécifications, déterminées sur la base du plan d'essai (9) et associées à des classes (4) selon la règle de classement, et une fréquence d'occurrence relative des classes de fonctionnement au regard des valeurs de fonctionnement (3), classées selon la règle de classement, des grandeurs de fonctionnement correspondant aux grandeurs de spécification est minimal selon un critère d'optimisation spécifié.

2. Procédé (1) selon la revendication 1, **caractérisé en ce que** les valeurs de fonctionnement (3) sont écrasées et/ou supprimées directement après l'étape d'agrégation (2).

3. Procédé (1) selon la revendication 1 ou la revendication 2, **caractérisé en ce que** les valeurs de fonctionnement (3) sont détectées dans le cas d'une pluralité de véhicules de terrain (11).

4. Procédé (1) selon l'une des revendications précédentes, **caractérisé en ce que** les grandeurs de spécification correspondent aux grandeurs de fonctionnement sélectionnées.

5. Procédé (1) selon l'une des revendications précédentes, **caractérisé en ce que** lors de l'étape d'agrégation (2), des fréquences de transition sont déterminées pour une ou plusieurs grandeurs de fonctionnement classées, selon lequel une fréquence de transition (24) est le nombre de passages d'une grandeur de fonctionnement ou de plusieurs grandeurs de fonctionnement d'une classe (4) à une autre classe (4), et selon lequel lors de l'étape de détermination (8), les points de référence (16) du plan d'essai (9) sont déterminés sur la base de la fréquence d'occurrence des classes de fonctionnement (7) et des fréquences de transition (24), selon lequel les points de référence (16) sont définis lors de l'étape de caractérisation (8) de telle sorte qu'un écart entre une fréquence d'occurrence relative des classes d'essai au regard des valeurs de spécification des grandeurs de spécification, déterminées sur la base du plan d'essai (9) et associées, selon la règle de classement, à des classes (4), et une fréquence d'occurrence relative des classes de fonctionnement au regard des valeurs de fonctionnement (3), classées selon la règle de classement, des grandeurs de fonctionnement correspondant aux grandeurs de spécification ainsi qu'un écart entre les fréquences de transition d'essai pour les grandeurs de spécification et les fréquences de transition pour les grandeurs de fonctionnement correspondant aux grandeurs de spécification soit minimal selon le critère d'optimisation spécifié, selon lequel une fréquence de transition d'essai est le nombre de passages d'une grandeur de spécification ou de plusieurs grandeurs de spécification d'une classe (4) à une autre classe (4).

6. Procédé (1) selon la revendication 5, **caractérisé en ce que** lors de l'étape de caractérisation (8), les points de référence (16) du plan d'essai (9) sont déterminés à l'aide d'une méthode utilisant les chaînes de Markov sur la base des fréquences d'occurrence de classe de fonctionnement (7) et des fréquences de transition (24).

7. Procédé (1) selon la revendication 5, **caractérisé en ce que** lors de l'étape de caractérisation (8), des points de référence (16) d'un plan de d'essai initial (25) sont déterminés à l'aide d'une méthode utilisant les chaînes de Markov sur la base des fréquences d'occurrence de classes de fonctionnement (7) et des fréquences de transition (24).

8. Procédé (1) selon la revendication 7, **caractérisé en ce que** lors de l'étape de caractérisation (8), directement après la définition du plan d'essai initial (25), le plan d'essai initial (25) est divisé, à l'aide d'un procédé de segmentation, en des segments de plan d'essai initial (27) mono- ou multidimensionnels.

9. Procédé (1) selon la revendication 8, **caractérisé en ce que** pour la segmentation d'au moins une grandeur de spécification initiale (26) du plan d'essai initial (25), respectivement au moins une valeur d'état (28), est spécifiée, et que les segments de plan d'essai initial (27) sont générés de telle sorte que chaque première et dernière valeur de spécification initiale de chaque grandeur de spécification initiale (26), pour laquelle au moins une valeur d'état (28) a été spécifiée, présente la valeur d'état (28) respective.

10. Procédé (1) selon la revendication 9, **caractérisé en ce que** pour la segmentation d'au moins deux grandeurs de spécification initiales (26) du plan d'essai initial (25), respectivement au moins une valeur d'état (28), est spécifiée, et que les segments de plan d'essai initial (27) sont générés de telle sorte que chaque première et dernière valeur de spécification initiale de chaque grandeur de spécification initiale (26), pour laquelle au moins une valeur d'état (28) a été spécifiée, présente la valeur d'état (28) respective.

11. Procédé (1) selon l'une des revendications 8 à 10, **caractérisé en ce qu'**ensuite les segments de plan d'essai initial (27) sont générés avec un procédé aléatoire pour former le plan d'essai (9) de telle sorte que le critère d'optimisation spécifié est minimisé.

12. Procédé (1) selon l'une des revendications 8 à 10, **caractérisé en ce qu'**ensuite à partir des segments de plan d'essai initial (27), de nombreux plans d'essai candidats sont générés avec au moins un procédé aléatoire, et qu'ensuite les plans de test candidats sont évalués au regard du critère d'optimisation et le plan d'essai candidat qui minimise le critère d'optimisation est sélectionné en tant que plan d'essai (9).

13. Procédé (1) selon l'une des revendications 1 à 5, **caractérisé en ce que** lors d'une étape d'analyse d'anciens essais, des valeurs de fonctionnement d'anciens essais au regard de grandeurs de fonctionnement d'anciens essais sont déterminées sur la base d'anciens plans d'essai (15) déjà existants, selon lequel les valeurs de fonctionnement d'anciens essais forment les valeurs de fonctionnement (3) et sont associées, selon la règle de classement, à des classes (4) et selon lequel lors de l'étape de caractérisation (8), les points de référence (16) sont déterminés à partir de sections (17) des anciens plans d'essai (15), selon lequel les sections (17) sont sélectionnées de telle sorte qu'un écart entre une fréquence d'occurrence relative de classes d'essai des valeurs de spécification déterminées sur la base du plan d'essai (9) et associées, selon la règle de classement, à des classes (4), et une fréquence d'occurrence relative de classes de fonctionnement au regard des valeurs de fonctionnement d'anciens essais classées selon la règle de classement est minimisé selon le critère d'optimisation spécifié.

14. Procédé (1) selon la revendication 13, **caractérisé en ce que** les valeurs de fonctionnement d'anciens essais ont été déterminées à l'aide d'anciens véhicules d'essai semblables au véhicule d'essai actuel.

15. Procédé (1) selon la revendication 13 ou la revendication 14, **caractérisé en ce que** les valeurs de fonctionnement des anciens essais sont déterminées par une technique de mesure.

16. Procédé (1) selon la revendication 13 ou la revendication 14, **caractérisé en ce que** les valeurs de fonctionnement des anciens essais sont déterminées par un modèle mathématique du véhicule d'essai ou d'un véhicule d'essai ancien.

17. Procédé (1) selon l'une des revendications précédentes, **caractérisé en ce que** les valeurs de spécification sont déterminées par un modèle mathématique du véhicule d'essai.
